# EUROPEAN PATENT APPLICATION

(11) **EP 0 885 996 A1**
(43) Date of publication of application: **23.12.1998**
(21) Application number: 97947883.1
(22) Date of filing: 10.12.1997
(51) Int. Cl.: D06N 3/00

(54) **PROCESSING PAPER FOR PRODUCING WET TYPE SYNTHETIC LEATHER AND METHOD OF ITS APPLICATION PROCESSING**

(30) Priority: 10.12.1996 JP 346686/96
(71) Applicant: Fuji Techno Co., Ltd., Chiyoda-ku, Tokyo 101 (JP); Chifa Leather Corporation, Taipei (TW); Kuribayashi, Tsuyoshi, Urawa-shi, Saitama 336 (JP)
(72) Inventor: WANG, James, Taipei (TW)
(74) Representative: Körber, Wolfhart, Dr.
(86) International application number: JP9704548
(87) International publication number: WO9826125

(57) **Abstract**

The present invention provides a process for producing a synthetic leather in a novel wet manner, by which the synthetic leather can be easily produced, irrespective of the type of a substrate, and a process sheet of paper suitable for use in this wet producing process.

An urethane resin is applied onto a water-resistant process sheet of paper made by laminating a thermoplastic resin film on at least one of surfaces of a water-resistant sheet of paper such as a synthetic paper. A substrate is affixed to the urethane resin layer on the process sheet of paper, and then, the resulting process sheet of paper is fed into a solidifying tank, where the urethane resin is solidified to form a film, thus producing a synthetic leather.

## Description

### FIELD OF THE INVENTION

The present invention relates to a process for producing a synthetic leather, and particularly, to a process for producing a synthetic leather in a wet manner, and a process sheet of paper used in this producing process. More particularly, the present invention relates to a wet process for producing a synthetic leather, wherein a uniform urethane resin layer can be formed even on a substrate which is thin and difficult to handle, such as tricot, bemberg nylon tricot and the like.

### DESCRIPTION OF THE RELATED ART

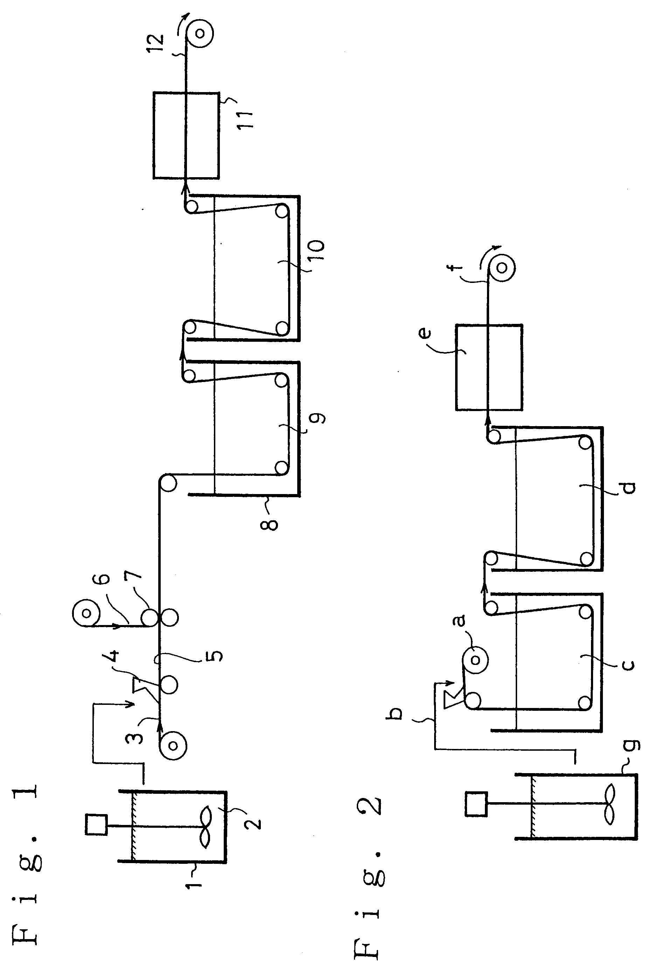

A wet process concerned with an improvement of the present invention is to produce a synthetic leather f, as shown in Fig.2, by applying an urethane resin b onto a substrate a such as a knitted/woven fabric, feeding the resulting material into a solidifying tank c where the urethane resin b is solidified to form a film, washing the film with water in a water-washing tank d, drying the film in a dryer e, and if required, subjecting the film to a finishing, and further forming an outermost surface layer of an urethane resin by lamination. In Fig. 2, reference character g indicates an urethane resin tank.

However, the wet process suffers from the following disadvantage: When the urethane resin is applied directly on the substrate made of a soft material such as tricot, bemberg nylon tricot and the like, the operation for applying the urethane resin is very difficult, because the substrate is soft, wrinkled and expandable. In addition, it is necessary to increase the amount of urethane resin applied, resulting in an increased thickness of the urethane resin layer. Thus, it is impossible to produce a thin urethane resin layer.

Accordingly, it is an object of the present invention to provide a process for producing a synthetic leather in a novel wet manner, wherein the disadvantage of the above-described wet process is overcome, and the synthetic leather can be easily produced, irrespective of the type of the substrate.

It is another object of the present invention to provide a process sheet of paper suitable for use in such wet producing process.

### DISCLOSURE OF THE INVENTION

To achieve the above object, according to the present invention, there is provided a process sheet of paper for use in the wet production of a synthetic leather, comprising a thermoplastic resin film laminated on at least one of surfaces of a water-resistant sheet of paper such as a synthetic paper.

According to claim 2 of the present invention, in addition to the feature of claim 1, the process sheet of paper is produced through an embossing treatment.

According to claim 3 of the present invention, in addition to the feature of claim 1 or 2, the water-resistant paper is made from a polyethylene, a polypropylene or a polyester, and the thermoplastic resin film is formed from an oriented polypropylene (OPP), a casting polypropylene (CPP), polymethylpentene (TPX) or syndiotactic polystyrene (SPS), and is laminated on the water-resistant paper by a dry lamination or an extrusion lamination.

According to claim 4 of the present invention, in addition to the feature of any of claims 1 to 3, the process sheet of paper has a specific gravity in a range of 0.7 to 1.5.

In addition, according to the present invention, there is provided a process for producing a synthetic leather which is an applicative process using a process sheet of paper of the above-described type, the process comprising the steps of applying an urethane resin onto a water-resistant process sheet of paper to form an urethane resin layer, affixing a substrate to the urethane resin layer on the process sheet of paper, and feeding the resulting process sheet of paper into a solidifying tank, where the urethane resin is solidified to form a film.

### BRIEF DESCRIPTION OF THE DRAWINGS

Fig.1 is a process flow diagram showing steps in a process for producing a synthetic leather according to the present invention; and
Fig.2 is a process flow diagram showing steps in the prior art wet producing process.

### BEST MODE FOR CARRYING OUT THE PRESENT INVENTION

According to the present invention, first, an urethane resin is applied onto a water-resistant process sheet of paper to form an urethane resin layer and then, a substrate is affixed to the urethane resin layer. Therefore, the urethane resin can be applied thinly and uniformly onto the process sheet of paper and moreover, the subsequent affixing of the substrate can be easily carried out. Thus, it is possible to provide a wet process for producing a synthetic leather very easily, wherein the disadvantage of the prior art wet process, i.e., the disadvantage that the operation for applying the urethane resin onto the substrate is difficult and hence, the production is difficult, is overcome.

It is required that the process sheet of paper is water-resistant, unlike the process sheet of paper used in the prior art dry process, because it is necessary to feed the process sheet of paper into the solidifying tank.

For this reason, it is necessary to use a process sheet of paper having a structure that a thermoplastic resin film such as an oriented polypropylene (OPP), a casting polypropylene (CPP), polymethylpentene (TPX) or syndiotactic polystyrene (SPS) is dry-laminated or extrusion-laminated onto at least one of surfaces of a water-resistant paper such as a synthetic paper, e.g., a synthetic paper made of a thermoplastic resin such as a polyethylene, a polypropylene or a polyester.

The thickness of the water-resistant paper is preferred to be in a range of about 50 to 800 µm.

The thickness of the thermoplastic synthetic resin film is preferred to be in a range of about 5 to 300 µm.

In the process sheet of paper having such a configuration, the substrate itself is water-resistant and moreover, thermoplastic synthetic resin film having the water resistance and having a flat surface is laminated on the surface of the substrate. Therefore, the entire process sheet of paper is excellent in water resistance, and the formed surface of the urethane resin layer is excellent in smoothness. Thus, the process sheet of paper can be reused, because of its increased water resistance and its higher strength. Moreover, the process sheet of paper is excellent in workability, because of the light weight and the excellent smoothness of the surface thereof.

It is preferable from the viewpoint of the water resistance and the viewpoint of prevention of the ply separation that an adhesive formed essentially from a material of the same type as the thermoplastic resin film is used for the lamination.

The specific gravity of the process sheet of paper is preferably in a range of 0.7 to 1.5. This is because if the specific gravity is lower than 0.7, the resulting process sheet of paper is light in weight and poor in secondary treatment and in workability, and there is not such a tolerable process sheet of paper produced as an existing film. In addition, if the specific gravity exceeds 1.5, the resulting process sheet of paper is heavy in weight, which is a problem.

The urethane resin used in the present invention may be an urethane conventionally used in the wet process, and is particularly not limited. For example, a solution of a one-pack type polyurethane in dimethyl formic amide (DMF) or the like is used as a starting material.

The urethane resin is applied onto the process sheet of paper at a thickness, for example, in a range of about 0.4 to 0.8 µm for a clothing, or in a range of about 0.7 to 1.5 µm for shoes, by a applying means such as a roll coater, a knife coater, a reverse coater, a curtain coater and the like. In the prior art wet process, the urethane resin is applied directly onto the substrate and hence, could not be applied very thinly. However, according to the present invention, the urethane resin can be applied very thinly.

In this manner, the synthetic leather can be simply produced only by affixing the substrate to the urethane resin applied onto the process sheet of paper and feeding the resulting material to a solidifying tank, where the urethane resin is solidified.

The substrate which may be used is a non-woven fabric, or a woven fabric such as tricot, bemberg nylon tricot and the like. Particularly, even a substrate difficult to handle, such as tricot and the like, can be used.

The solidifying tank may be similar to the solidifying tank used in the prior art wet process, and a solution of a one-pack type polyurethane in DMF is accommodated in the solidifying tank.

Then, the sheet of paper having the solidified urethane resin applied thereon is fed into a water-washing tank for washing with water, fed into a drying furnace for drying, and then removed. If required, the resulting sheet of paper is subjected to various finishing steps such as an embossing finishing by an embossing roll to produce a synthetic leather.

An outermost surface layer formed from an urethane resin may be further provided on the above-described urethane resin layer by a dry method.

### EXAMPLE

A particular example of the present invention will now be described with reference to the accompanying drawing.

### (Example 1)

In Fig. 1, reference character 1 indicates an urethane resin tank. A starting material 2 (an urethane resin) comprising a solution of a one-pack polyurethane in DMF for forming an urethane resin layer is accommodated in the urethane resin tank.

The urethane resin 2 was applied, at a thickness of 0.4 to 0.8 µm, onto the surface of a synthetic resin film of a process sheet of paper 3 formed by extrusion-laminating a thermoplastic synthetic resin (polypropylene) film on a sheet of synthetic paper having a thickness of 150 µm by use of a knife coater 4, thereby forming an urethane resin layer 5. A substrate 6 comprising a tricot having a thickness of 0.1 to 3.0 mm was affixed to the process sheet of paper having the urethane resin layer 5 formed thereon. The resulting sheet of paper is fed into the solidifying tank 8, wherein the urethane resin layer 5 was solidified. A solidifying liquid 9 consisting essentially of water and DMF was accommodated in the solidifying tank 8.

Then, the sheet of paper having the solidified urethane resin layer 5 thereon was fed into a water washing tank 10 for washing with water, followed by drying in the dryer 11 at a temperature set in a range of up to 300°C. The process sheet of paper 3 was removed and thus completed as a synthetic leather 12.

The surface of the synthetic leather 12 produced in the above manner may be subjected to a finishing treatment such as an embossing or the like, or an outermost surface layer of an urethane resin may be provided on the surface of the synthetic leather 12 in a special dry manner.

Alternatively, the process sheet of paper itself in the example may be subjected to an embossing treatment to produce embossed synthetic leather.

The observation of the synthetic leather produced in the above manner showed that the coating film of the urethane resin was formed thinly in the order of 0.01 to 3.0 mm and uniformly. The process sheet of paper could be used repeatedly about 30 times.

### INDUSTRIAL APPLICABILITY

In this way, according to the present invention, it is possible to provide a wet process for producing a synthetic leather, wherein the disadvantage of the prior art wet process can be overcome; the synthetic leather can be easily produced irrespective of the type of the substrate, and the urethane resin layer can be coated uniformly and thinly even onto a substrate which is soft and difficult to handle, such as tricot. In addition, it is possible to provide a process sheet of paper which is suitable for use in the above producing process and moreover, can be repeatedly used.

## Claims

1. A process sheet of paper for use in the wet production of a synthetic leather, comprising a thermoplastic resin film laminated on at least one of surfaces of a water-resistant sheet of paper such as a synthetic paper.

2. A process sheet of paper for use in the wet production of a synthetic leather according to claim 1, wherein said process sheet of paper is produced through an embossing treatment.

3. A process sheet of paper for use in the wet production of a synthetic leather according to claim 1 or 2, wherein said water-resistant paper is made from a polyethylene, a polypropylene or a polyester, and said thermoplastic resin film is formed from an oriented polypropylene (OPP), a casting polypropylene (CPP), polymethylpentene (TPX) or syndiotactic polystyrene (SPS), and laminated on said water-resistant paper by a dry lamination or an extrusion lamination.

4. A process sheet of paper for use in the wet production of a synthetic leather according to any of claims 1 to 3, wherein said process sheet of paper has a specific gravity in a range of 0.7 to 1.5.

5. A process for producing a synthetic leather using a process sheet of paper of the above-described type, comprising the steps of applying an urethane resin onto a water-resistant process sheet of paper to form an urethane resin layer, affixing a substrate to said urethane resin layer on said process sheet of paper, and feeding the resulting process sheet of paper into a solidifying tank, where said urethane resin is solidified to form a film.
